# EUROPÄISCHE PATENTANMELDUNG

(11) **EP 1 091 134 A2**
(43) Veröffentlichungstag der Anmeldung: **11.04.2001**
(21) Anmeldenummer: 00121301.6
(22) Anmeldetag: 06.10.2000
(51) Int. Cl.: F16B 13/06

(54) **Ankerbolzen mit Spreizhülse**

(30) Priorität: 07.10.1999 DE 29917678 U
(71) Anmelder: Berner GmbH, 74653 Künzelsau (DE)
(72) Erfinder: Runge, Erich, 74653 Künzelsau (DE)
(74) Vertreter: Kitzhofer, Thomas, Dipl.-Ing.

(57) **Zusammenfassung**

Ein Bolzenanker mit geschlitzter Spreizhülse (21) hat einen Konus (17) an seinem in Einschlagrichtung (E) vorderen Ende (3) zum Aufweiten der Spreizhülse (21), ein Befestigungsmittel (7) am hineren Ende (5) und einen Zwischenabschnitt (15), der sich an den Konus unmittelbar in Richtung zum hinteren Ende (5) anschließt und der im nicht montierten Zustand des Bolzenankers von der Spreizhülse (21) umgeben ist. Die Oberfläche sowohl des Konus (17) als auch des Zwischenabschnitts (15) werden aufgerauht, so daß dem Kaltverschweißen von Bolzenanker und Spreizhülse beim Setzen des Bolzenankers wirksam vorgebeugt wird.

## Beschreibung

Die Erfindung betrifft einen Bolzenanker mit geschlitzter Spreizhülse, mit einem Konus an dem in Einschlagrichtung vorderen Ende des Bolzenankers zum Aufweiten der Spreizhülse, mit einem Befestigungsmittel am hinteren Ende und mit einem Zwischenabschnitt am Bolzenanker, der sich an den Konus unmittelbar in Richtung zum hinteren Ende anschließt und der in nicht montiertem Zustand des Bolzenankers von der Spreizhülse umgeben ist. Ferner betrifft die Erfindung ein Verfahren zum Herstellen eines erfindungsgemäßen Bolzenankers mit Spreizhülse.

Ein derartiger Bolzenanker ist aus der DE 298 05 837 U1 bekannt. Bei diesem Bolzenanker ist zur Verringerung der Verschiebekraft zwischen Spreizhülse und Konus einerseits eine Beschichtung an der Innenseite der Spreizhülse vorgesehen. Andererseits ist der Konus durch Sandstrahlen angerauht. Damit soll dem Kaltverschweißen beim Aufspreizen der Spreizhülse vorgebeugt werden.

Aus der DE 296 02 513 ist es darüber hinaus bekannt, die Spreizhülse innenseitig mit einer angerauhten Oberfläche zu versehen.

Aufgabe der Erfindung ist es, einen Bolzenanker mit geschlitzter Spreizhülse zu schaffen, welcher sich durch ein verbessertes Setzverhalten auszeichnet.

Dies wird bei einem Bolzenanker der eingangs genannten Art dadurch erreicht, daß die Oberfläche des Konus und die des Zwischenabschnitts aufgerauht ist. Der Bolzenanker hat vor seinem letzten Bearbeitungsschritt eine relativ glatte Oberfläche. Durch das Aufrauhen erhält der Bolzenanker unterschiedliche Rauhigkeiten auf seiner Oberfläche, nämlich einerseits in den Bereichen, die nicht aufgerauht werden, eine relativ glatte Oberfläche und andererseits in den aufgerauhten Bereichen Oberflächen mit höheren Rauhtiefen.

Gegenüber dem Stand der Technik sieht der erfindungsgemäße Bolzenanker auch Maßnahmen zur Reduzierung der Reibung zwischen der Oberfläche des Ankers und der Spreizhülse im Bereich des hinteren Endes der Spreizhülse vor. Obwohl die größten Kräfte zwischen Spreizhülse und Oberfläche des Bolzenankers im Bereich des Konus auftreten, hat es sich herausgestellt, daß überraschenderweise auch im Bereich des hinteren Endes der Spreizhülse oder, allgemeiner gesprochen, außerhalb des Konus im Bereich des Zwischenabschnitts erhebliche radial gerichtete Normalkräfte und damit Reibungskräfte zwischen Spreizhülse und Bolzenanker beim Setzen auftreten können, die das optimale Verschieben der Spreizhülse relativ zum Bolzenanker behindern. Beispielsweise kann sich die Spreizhülse relativ zum Bolzenanker verkanten, so daß bereichsweise hohe Normalkräfte im Bereich des hinteren Endes der Spreizhülse auftreten können. Darüber hinaus haben die Zwischenabschnitte im Stand der Technik üblicherweise eine Oberfläche, die durch das Herstellungsverfahren, nämlich Drehen, bedingte Riefen in Umfangsrichtung aufweisen. Selbst wenn diese Riefen nur eine geringe Tiefe aufweisen, können sie der axialen Verschiebung der Spreizhülse einen überraschend hohen Widerstand entgegensetzen. Obwohl die Oberfläche des erfindungsgemäßen Bolzenankers im Bereich des Zwischenabschnitts aufgerauht ist, ergibt sich ein geringerer Widerstand gegen Verschieben als bei einer glatten, durch Drehen bearbeiteten Oberfläche.

Vorzugsweise kann die Spreizhülse innenseitig unmittelbar auf der Oberfläche des Bolzenankers, d.h. auf dem Konus, dem Zwischenabschnitt oder dem sich an den Konus zum freien Ende hin anschließenden zylindrischen Abschnitt anliegen, d.h. es ist keine Beschichtung außenseitig an diesem zylindrischen Abschnitt, dem Konus oder dem Zwischenabschnitt oder innenseitig an der Spreizhülse vorgesehen, womit sich der erfindungsgemäße Bolzenanker deutlich von dem nach der DE 298 05 837 U1 absetzt. Im Stand der Technik war eine Beschichtung in Form eines separaten, mit der Spreizhülse verbundenen Teiles vorgesehen, was den Bolzenanker jedoch teuer macht.

Beim erfindungsgemäßen Bolzenanker, bei dem auch die Spreizhülse aus Metall sein sollte, kann Metall auf Metall gleiten.

Vorzugsweise sind die aufgerauhten Bereiche des Bolzenankers im Bereich der Oberfläche zusätzlich verdichtet und damit üblicherweise auch härter als die nicht aufgerauhten Bereiche. Durch das Verdichten wird der Abrieb beim Entlanggleiten der Spreizhülse auf der Oberfläche des Bolzenankers während des Setzens verringert. Ferner kann sich die Spreizhülse weniger tief in die Oberfläche eingraben, was dem Setzverhalten zusätzlich zugute kommt.

Vorzugsweise ist auch der im wesentlichen zylindrische Abschnitt, der unmittelbar an den Konus in Richtung zum vorderen Ende angrenzt, genauso wie die Oberfläche des Konus und des Zwischenabschnitts aufgerauht, denn am Ende des Setzungsvorganges gleitet die Spreizhülse auch längs dieser Oberfläche.

Das Aufrauhen kann vorzugsweise durch Strahlen wie Sandstrahlen, Kugelstrahlen, Strahlen mit Kunststoffgranulat, mit Glasmehl oder Glas-Strahlperlen und im Trockenstrahl oder Naßschlammverfahren erfolgen. Durch das Strahlen wird auch der behandelte Bereich oberflächlich verdichtet. Darüber hinaus kann auch ein Werkzeug mit Druck auf die aufzurauhende Oberfläche aufgepreßt werden, zum Beispiel indem eine rauhe Werkzeugoberfläche auf den Bolzenanker aufgepreßt oder gerollt wird. Üblicherweise läßt sich von der Oberfläche des Endprodukts, also des Bolzenankers, auf das Bearbeitungsverfahren schließen.

Die Werkzeugoberfläche wiederum kann ebenfalls durch Strahlen, Ätzen, Erodieren, zum Beispiel Funkenerodieren, bearbeitet sein. Dann erhält die Oberfläche des Konus und des Zwischenabschnitts sozusagen ein Negativ der bearbeiteten Werkzeugoberfläche.

Die Spreizhülse hat innenseitig vorzugsweise radiale Vorsprünge, zum Beispiel Einprägungen, mit denen sie den Zwischenabschnitt kontaktiert. Vorzugsweise ist deshalb der Zwischenabschnitt durch den theoretischen Bewegungsbereich der Vorsprünge oder Berührpunkte sowohl im gesetzten als auch im nicht gesetzten Zustand des Bolzenankers definiert.

Weitere Merkmale und Vorteile der Erfindung ergeben sich aus der nachfolgenden Beschreibung und aus der nachfolgenden Zeichnung, auf die Bezug genommen wird.

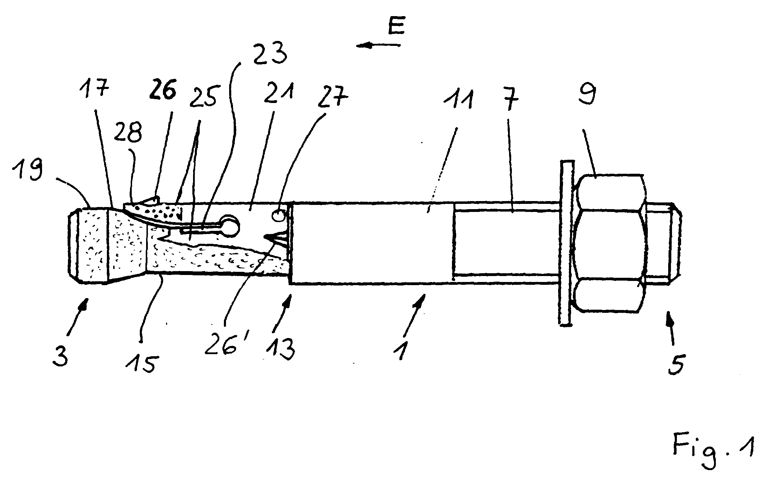

Figur 1 zeigt eine Seitenansicht einer Ausführungsform des erfindungsgemäßen Bolzenankers mit teilweise abgeschnittener Spreizhülse.

In Figur 1 ist ein Bolzenanker 1 gezeigt, der in Einschlagrichtung E ein vorderes Ende 3 und ein hinteres Ende 5 aufweist. Im Bereich des hinteren Endes 5 ist ein Befestigungsmittel in Form eines Außengewindes 7 vorgesehen, auf das eine Mutter 9 aufgedreht ist, wobei üblicherweise noch eine Beilagscheibe aufgeschoben wird. An das Gewinde 7 schließt sich ein zylindrischer Schaftabschnitt 11 an. Der Schaftabschnitt 11 geht über einen Absatz 13, welcher einen Anschlag bildet, in einen zylindrischen Zwischenabschnitt 15 über. Der zylindrische Zwischenabschnitt 15 wiederum grenzt unmittelbar an einen Konus 17 an, welcher an einem zylindrischen Abschnitt 19 endet. In dem in Figur 1 gezeigten, nicht montierten Zustand wird der Zwischenabschnitt 15 von einer aufgesetzten Spreizhülse 21 umgeben, die durch Stanzen aus Blech und Biegen hergestellt wird. Die Spreizhülse 21 wird um den zylindrischen Abschnitt 15 gebogen und weist einen durchgehenden Schlitz (nicht gezeigt) sowie zwei axial nicht durchgehende Schlitze auf, von denen ein Schlitz 23 gezeigt ist. Es ergeben sich zwischen den Schlitzen Spreizlappen 25, wobei in Figur 1 der dargestellte untere Spreizlappen nur abschnittsweise dargestellt ist. Die Spreizlappen erstrecken sich im nicht montierten Zustand des Bolzenankers bis in den Anfangsbereich des Konus 17. Am vorderen Ende jedes Spreizlappens 25 stehen vordere Haltezapfen 26 und am hinteren Ende der Spreizhülse hintere Haltezapfen 26' radial nach außen ab, die in das Mauerwerk eindringen sollen.

Der vordere Bereich 28 der Spreizlappen 25 ist außenseitig wie der Zwischenabschnitt 15 aufgerauht. Dadurch soll der Sitz der Spreizhülse 21 im Mauerwerk verbessert werden.

Im Bereich ihres hinteren Endes sind Einprägungen 27 an der Spreizhülse 21 vorgesehen, durch die radial von der Innenseite vorstehende Vorsprünge gebildet sind, mit denen die Spreizhülse am Zwischenabschnitt 15 anliegt.

Der Bolzenanker selbst wird durch Drehen endbearbeitet. Der Zwischenabschnitt 15, der Konus 17 und der zylindrische Abschnitt 19 werden anschließend an ihrer Oberfläche nochmals aufgerauht, so daß diese Bereiche eine höhere Rauhheit als beispielsweise der Abschnitt 11 aufweist. Dieses Aufrauhen kann durch eines der folgenden Verfahren erreicht werden:

Strahlen, wie Sandstrahlen oder Kugelstrahlen, Aufpressen einer rauhen Werkzeugoberfläche oder Rollen einer entsprechend rauhen Werkzeugoberfläche auf die aufzurauhenden Oberflächen, wobei durch diese Verfahren der Bolzenanker in den aufgerauhten Bereichen nahe der Oberfläche zusätzlich verdichtet und gehärtet wird.

Die rauhe Werkzeugoberfläche, die auf die Oberfläche des Bolzenankers aufgepreßt wird, kann zum Beispiel durch Funkenerosion, Strahlen oder Ätzen bearbeitet worden sein, so daß die anschließend bearbeitete Oberfläche am Bolzenanker ein Negativ der Werkzeugoberfläche darstellt.

Wenn die Oberflächen zum Beispiel durch unmittelbares Ätzen der Oberflächen bearbeitet werden, ergibt sich jedoch keine Verdichtung der Oberfläche.

Durch das Aufrauhen und Verdichten der Oberfläche sind die beim Drehvorgang entstandenen Rillen an der Oberfläche des Bolzenankers so gut wie oder vorzugsweise überhaupt nicht mehr sichtbar.

Wenn der herzustellende Bolzenanker durch Strahlen bearbeitet werden soll, kann es durchaus vorkommen, daß auch der Abschnitt 11 teilweise oder vollständig mitgestrahlt wird, zum Beispiel falls es schwierig sein sollte, diesen Abschnitt abzudecken. Üblicherweise wird der Bolzenanker aber in dem Raum, in dem gestrahlt wird, gehalten, so daß der durch das Haltewerkzeug abgedeckte Bereich eine nicht gestrahlte Oberfläche aufweist, durch die ein Vergleich mit der gestrahlten Oberfläche möglich ist.

Vorzugsweise haben alle angerauhten Oberflächen die gleiche Rauhigkeit, wobei es aber gerade beim Strahlen vorkommen kann, daß bei einem anderen Auftreffwinkel des Strahlmittels auf die Oberfläche im Bereich des Konus andere Oberflächenrauhigkeiten erzielt werden als bei den zylindrischen Abschnitten 15 und 19.

Der erfindungsgemäße Bolzenanker wird, zusammenfassend gesagt, durch folgendes Verfahren hergestellt: Die Oberfläche des Konus und wenigstens des Zwischenabschnitts werden aufgerauht.

Vorzugsweise wird das Verfahren dadurch modifiziert, daß die Oberfläche in einem Arbeitsschritt aufgerauht und in diesem Bereich oberflächlich gleichzeitig verdichtet wird.

Ferner kann das Aufrauhen durch Strahlen, Ätzen, Erodieren, Funkenerodieren oder durch Aufpressen oder Rollen einer aufgerauhten Werkzeugoberfläche erfolgen.

Das Strahlen kann durch Sandstrahlen, Kugelstrahlen, Strahlen mittels Kunststoffgranulat, Glasmehl, Glas-Strahlperlen erfolgen. Bevorzugte Strahlmittel sind Siliziumkarbid (SiC) und Elektrokorund (Al₂O₃). Das Strahlen kann ein Trockenstrahlen oder ein Naßschlammstrahlen sein, wobei bei letzterem Verfahren auch noch Flüssigkeit Teil des Strahlmittels ist.

Beim Setzen des Bolzenankers wird dieser in ein Bohrloch, zum Beispiel in der Außenfassade eines Gebäudes, eingeschlagen, wobei die Spreizhülse 21 während des Einschlagens aufgrund ihres axialen Spiels zum Bolzenanker nach hinten wandert, bis sie am Absatz 13 anschlägt. Während des Einschlagens werden durch die Haltezapfen 26, die gegen die Bohrlochwandung drücken, die Spreizlappen 25 radial nach innen gedrückt, so daß die Schlitze 23 zum Teil verschwinden können.

Nachdem der Bolzenanker vollständig in das Mauerwerk eingetrieben worden ist, wird durch Drehen der Mutter 9 eine nach hinten gerichtete Zugkraft erzeugt, so daß der Bolzenanker geringfügig aus dem Mauerwerk geschoben wird. Der Konus 17 wandert damit in Richtung der Spreizhülse 21. Damit gleitet die Spreizhülse 21 auf der Oberfläche des Konus 17 entlang, und zwar sowohl axial als auch radial nach außen, wobei die auftretenden Reibungskräfte zwischen der Spreizhülse 21 und dem Konus 17 durch die Oberfläche mit erhöhter Rauhigkeit relativ geringgehalten werden können. Auch im Bereich des hinteren Endes der Spreizhülse 21 wird dem Gleiten der beiden Teile aufeinander eine geringe Kraft entgegengesetzt, da im Bereich der Berührflächen von Zwischenabschnitt 15 und Innenseite der Spreizhülse 21 auf der gesamten Verschiebestrecke eine aufgerauhte Oberfläche zur Verfügung steht, die ein Kaltverschweißen wirksam verhindert.

## Patentansprüche

1. Bolzenanker mit geschlitzter Spreizhülse (21),
mit einem Konus (17) an dem in Einschlagrichtung (E) vorderen Ende (3) des Bolzenankers zum Aufweiten der Spreizhülse (21),
mit einem Befestigungsmittel (7) am hinteren Ende (5) und
mit einem Zwischenabschnitt (15) am Bolzenanker, der sich an den Konus (17) unmittelbar in Richtung zum hinteren Ende (5) anschließt und der im nicht montierten Zustand des Bolzenankers von der Spreizhülse (21) umgeben ist,
dadurch gekennzeichnet, daß
die Oberfläche des Konus (17) und des Zwischenabschnitts (15) aufgerauht ist.

2. Bolzenanker nach Anspruch 1, dadurch gekennzeichnet, daß zwischen der Innenseite der Spreizhülse (21) und der Oberfläche des Konus (17) und des Zwischenabschnitts (15) keine Beschichtung und kein Zwischenteil vorgesehen sind.

3. Bolzenanker nach Anspruch 1 oder 2, dadurch gekennzeichnet, daß sich zum vorderen Ende (3) des Bolzenankers an den Konus (17) ein im wesentlichen zylindrischer Abschnitt (19) anschließt, dessen Oberfläche ebenfalls aufgerauht ist.

4. Bolzenanker nach einem der vorhergehenden Ansprüche, dadurch gekennzeichnet, daß der Bolzenanker am Konus (17) und am Zwischenabschnitt (15) im Bereich der aufgerauhten Oberfläche verdichtet ist.

5. Bolzenanker nach Anspruch 4, dadurch gekennzeichnet, daß die Oberfläche durch Strahlen, Aufpressen einer rauhen Werkzeugoberfläche oder Rollen einer rauhen Werkzeugoberfläche aufgerauht und verdichtet ist.

6. Bolzenanker nach einem der Ansprüche 1 bis 3, dadurch gekennzeichnet, daß die Oberfläche durch Funkenerosion oder Ätzen aufgerauht ist.

7. Bolzenanker nach einem der vorhergehenden Ansprüche, dadurch gekennzeichnet, daß der Zwischenabschnitt (15) durch einen Anschlag (13) für die axial bewegliche Spreizhülse (21) in Richtung zum hinteren Ende (5) begrenzt wird.

8. Bolzenanker nach einem der vorhergehenden Ansprüche, dadurch gekennzeichnet, daß die Spreizhülse (21) innenseitig radiale Vorsprünge hat, mit denen sie den Zwischenabschnitt (15) kontaktiert.

9. Bolzenanker nach Anspruch 8, dadurch gekennzeichnet, daß die Vorsprünge durch Einprägungen (27) gebildet sind.

10. Bolzenanker nach einem der vorhergehenden Ansprüche, dadurch gekennzeichnet, daß die Spreizhülse (21) aus Metall ist.

11. Verfahren zum Herstellen eines Bolzenankers mit geschlitzter Spreizhülse (21) nach einem der vorhergehenden Ansprüche, gekennzeichnet durch folgende Schritte:
a) Herstellen des Bolzenankers
b) Aufrauhen der Oberfläche des Konus (17) und der Oberfläche des Zwischenabschnitts (15)
c) Herstellen der Spreizhülse (21) und
d) Verbinden von Spreizhülse (21) und Bolzenanker, so daß die Spreizhüle (21) den Zwischenabschnitt (15) umgibt.

12. Verfahren nach Anspruch 11, dadurch gekennzeichnet, daß die Oberfläche durch Strahlen, Aufpressen einer rauhen Werkzeugoberfläche oder Rollen einer rauhen Werkzeugoberfläche, durch Funkenerosion oder Ätzen aufgerauht ist.

13. Verfahren nach einem der vorhergehenden Ansprüche, dadurch gekennzeichente, daß der Bolzenanker beim Aufrauhen nahe der Oberfläche zugleich verdichtet wird.

14. Verfahren nach einem der vorhergehenden Ansprüche, dadurch gekennzeichnet, daß der Bolzenanker durch Drehen vor dem Aufrauhen endbearbeitet wird.
